# FASCICULE DE BREVET EUROPEEN

(11) **EP 1 220 774 B1**
(45) Date de publication et mention de la délivrance du brevet: **28.01.2004**
(21) Numéro de dépôt: 00967951.5
(22) Date de dépôt: 05.10.2000
(51) Int. Cl.: B62D 65/00

(54) **MOYEN DE MAINTIEN EN POSITION DE DEUX PIECES L'UNE PAR RAPPORT A L'AUTRE.**
HALTEVORRICHTUNG ZUM HALTEN EINES TEILS HINSICHTIG EINES ZWEITEN TEILS
MEANS FOR HOLDING TWO PIECES IN POSITION IN RELATION TO EACH OTHER

(30) Priorité: 11.10.1999 FR 9912620
(43) Date de publication de la demande: 10.07.2002
(73) Titulaire: ABB Body in White, 95250 Beauchamp (FR)
(72) Inventeur: DEMIT, Daniel, F-92400 Courbevoie (FR); GUILLOMET, Patrick, F-92190 Meudon (FR)
(74) Mandataire: Lavialle, Bruno
(86) Numéro de dépôt international: PCT/FR2000/002765
(87) Numéro de publication internationale: WO 2001/026953

(56) Documents cités:
- EP-A- 0 226 212
- EP-A- 0 351 377
- GB-A- 1 445 394

## Description

La présente invention concerne un moyen de maintien en position de deux pièces destinées à être fixées l'une à l'autre. Un tel moyen de maintien en position est par exemple utilisable pour réaliser un inter-verrouillage de deux outils, ou d'un outil et d'un support d'outil.

Dans les lignes d'assemblage de carrosseries d'automobiles, on assure la mise en géométrie des sous-ensembles (tels que le soubassement, les côtés de caisse, la jupe arrière...) les uns par rapport aux autres et par rapport aux robots de soudures. Les pièces de carrosserie étant par nature déformables lorsqu'elles sont soumises à des contraintes, les outillages utilisés pour réaliser une carrosserie de géométrie déterminée et reproductible ont une double fonction : d'abord constituer une armature pour chacun des sous-ensembles déformables afin de les rigidifier et ensuite constituer une interface stable permettant une mise en position précise dans un réfé rentiel fixe qui est celui des robots de soudure.

Dans un procédé de réalisation de carrosseries automobiles récemment mis au point, l'étape d'assemblage de la carrosserie comprend une phase de mise en place et de maintien en position de deux côtés de caisse et d'une jupe arrière dans le repère d'un poste d'assemblage au moyen de deux outils latéraux parallèles coopérant chacun avec un côté de caisse et d'un outil transversal coopérant avec la jupe arrière, les trois outils étant liés les uns aux autres et au référentiel du poste d'assemblage de manière que l'outil transversal soit placé et maintenu dans une position précise et verrouillée dans ce repère et qu'il forme un outil d'entretoisement et de contreventement pour les deux outils parallèles dans une direction perpendiculaire à ceux-ci.

Selon le type de carrosserie à assembler, il est nécessaire soit que la jupe arrière soit préalablement mise en place pour que les côtés de caisse puissent ensuite venir encadrer celle-ci, soit que les côtés de caisse soient préalablement mis en place pour que la jupe arrière puisse venir ensuite coiffer les extrémités correspondantes de ceux-ci. En outre, dans un souci d'augmentation de la productivité, il peut être intéressant que les trois outils puissent s'engager mutuellement ou se dégager les uns des autres de manière simultanée permettant ainsi un gain de temps. Or, les moyens connus de maintien en position de deux pièces l'une par rapport à l'autre, comme ceux décrits dans le document EP-A-226 212, n'autorisent qu'une seule direction d'engagement relatif desdites pièces de sorte que leur incorporation au poste d'assemblage précité pour relier les outils obligerait une mise en place des outils au moins partiellement successive et dans un ordre prédéterminé. Ceci limiterait la flexibilité et la productivité maximale du procédé.

Par l'invention, on propose un moyen simple de maintien en position de deux pièces permettant une approche des pièces l'une de l'autre selon au moins deux directions extrêmes d'accostage coplanaires formant entre elles un angle d'accostage.

Selon l'invention, le moyen de maintien en position comprend d'une part au moins un vé mâle et un vé femelle pourvus chacun de moyens de sa fixation à une des pièces de telle manière que chaque vé soit centré sensiblement sur une direction parallèle à la bissectrice de l'angle d'accostage et le vé femelle possédant une portion d'entrée ayant un angle d'ouverture au moins égal à l'angle d'accostage, et d'autre part, un moyen pour appliquer le vé mâle contre le vé femelle selon une direction parallèle à ladite bissectrice.

Ainsi, chaque vé assure une fonction de guidage / recentrage de l'autre vé durant la phase d'approche des deux pièces l'une vers l'autre qui permet un alignement des axes des vés et une fonction de positionnement statique de l'autre vé une fois les pièces approchées et maintenues en position par le moyen appliquant les vés l'un contre l'autre.

Selon une première caractéristique particulière, les vés ont des angles d'ouverture sensiblement égaux qui sont supérieurs à l'angle d'accostage et, plus particulièrement pour un angle d'accostage d'environ 90°, les angles d'ouverture des vés sont égaux à environ 120°. Les vés ayant un angle d'ouverture supérieur à l'angle d'accostage, on s'affranchit des incertitudes du positionnement relatif des vés préalablement à leur mise en contact. Ceci est particulièrement intéressant lorsque les pièces sont mises en place par des robots standards ayant une précision de positionnement moyenne.

Selon une deuxième caractéristique particulière, le vé femelle possède une portion de fond ayant un angle d'ouverture sensiblement égal à l'angle d'ouverture du vé mâle qui est au moins égal à l'angle d'accostage et l'angle d'ouverture de la portion d'entrée du vé femelle est supérieur à l'angle d'ouverture de la portion de fond de celui-ci, plus particulièrement pour un angle d'accostage sensiblement égal à 90°, l'angle d'ouverture du vé mâle et de la portion de fond du vé femelle est sensiblement égal à 90° et l'angle d'ouverture de la portion d'entrée du vé femelle est sensiblement égal à 120°.

Selon un mode de réalisation particulier, le moyen pour appliquer les vés l'un contre l'autre comprend un pion s'étendant en saillie du vé mâle symétriquement par rapport à celui-ci pour être introduit dans une lumière allongée ménagée dans le vé femelle et de grand axe contenu dans le plan des directions d'accostage, au moins une mâchoire étant montée mobile sur le pion pour être actionnée entre une position active dans laquelle elle forme une butée pour une face arrière du vé femelle opposée au vé mâle et une position inactive dans laquelle elle est escamotée et permet le passage libre du pion dans la lumière du vé femelle. Le moyen de maintien en position a ainsi une structure compacte et relativement simple.

La présente invention a également pour objet un dispositif d'assemblage d'une carrosserie, le dispositif comportant deux outils latéraux de support de côtés de caisse, un outil transversal à ces deux outils latéraux, et des moyens présentant l'une des caractéristiques précitées pour maintenir en position les uns par rapport aux autres les outils latéraux et l'outil transversal, l'outil transversal comportant au moins deux vés symétriques par rapport à un axe longitudinal de la carrosserie et destinés à coopérer avec des vés correspondants fixés sur les outils latéraux.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique en perspective d'un dispositif d'assemblage de carrosseries de véhicules conforme à l'invention,
- la figure 2 est une vue partielle de dessus illustrant un premier mode d'approche mutuelle des outils du dispositif conforme à l'invention,
- la figure 3 est une vue analogue à la figure 2 montrant un deuxième mode d'approche mutuelle des outils,
- la figure 4 est une vue en perspective d'un moyen de maintien en position de deux outils en cours d'approche,
- la figure 5 est une vue partielle en coupe de deux outils maintenus en position l'un par rapport à l'autre,
- les figures 6 et 7 sont des vues de face et de côté d'une variante de réalisation du vé mâle du dispositif de l'invention,
- les figures 8 et 9 sont des vues analogues aux figures 6 et 7 de la variante de réalisation correspondante du vé femelle.

Le dispositif conforme à l'invention est destiné à l'assemblage de carrosseries de véhicules comportant un soubassement 1 de la caisse du véhicule, deux côtés de caisse 2 et une jupe arrière 3.

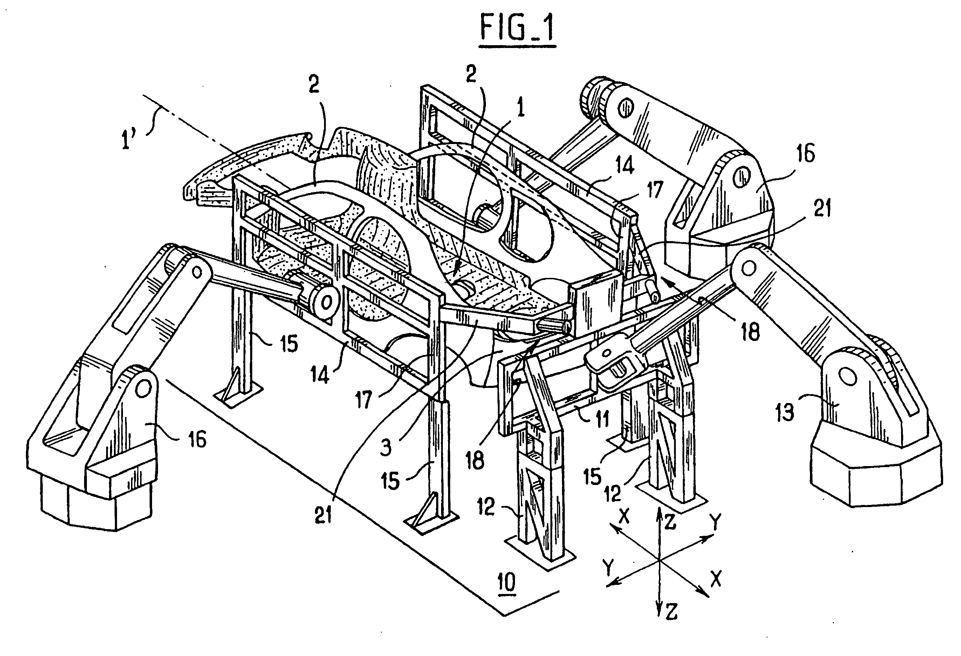

En référence à la figure 1, le dispositif d'assemblage comprend un bâti fixe 10 qui possède un repère X, Y, Z. Dans ce bâti, on peut apporter un support pour le soubassement 1 de la caisse du véhicule automobile de manière que l'axe longitudinal 1' du soubassement 1 soit parallèle à la direction X. Les moyens pour apporter ce support et le mettre en position dans le repère sont connus en eux-mêmes et ne sont pas représentés. Ce support peut par exemple être constitué par une palette qui circule au moyen d'un convoyeur traversant le bâti 10 le long de la direction X, des moyens d'élévation étant prévus dans le bâti pour désolidariser la palette du convoyeur et la mettre en référence dans le repère X, Y, Z.

Le dispositif d'assemblage comprend un outil transversal destiné à coopérer avec la jupe 3 et deux outils latéraux destinés à coopérer avec les côtés de caisse 2.

L'outil transversal est symbolisé sous la forme d'un cadre 11 transversal à la direction X et susceptible d'être attelé au bâti 10 par l'intermédiaire par exemple de plots de support 12. Les plots 12 coopèrent ici avec le cadre 11 par quatre points de fixation qui permettent d'assurer une immobilisation complète du cadre 11 dans le bâti 10 tant en translation le long des directions X, Y, Z qu'en rotation autour de celles-ci. Le cadre 11 est ici équipé sur l'une de ses faces, de moyens de préhension et de manipulation pour un robot 13 de sa manutention. Sur son autre face, le cadre 11 possède des pinces pour coopérer avec la jupe 3.

Les outils latéraux sont symbolisés sous la forme de cadres 14 qui sont parallèles à la direction Z et reposent sur le bâti 10 par des plots 15, ce qui fixe leur position dans la direction Z. Chaque cadre 14 est équipé sur l'une de ses faces de moyens de préhension et de manipulation pour un robot 16 de sa manutention et sur son autre face de pinces pour coopérer avec le côté de caisse 2 correspondant.

Le montant arrière 17 de chaque cadre 14 est relié au cadre 11 par l'intermédiaire d'un moyen de maintien en position généralement désigné en 18 pour maintenir les cadres 14 dans une position verticale entretoisée et contreventée par le cadre 11 et fixer également les cadres 14 dans leur position le long de la direction X. De manière analogue, on peut prévoir que les cadres 14 constituent les éléments de blocage en X et Z du cadre 11 qui lui ne coopèrerait directement avec le bâti 10 que par un plot l'immobilisant en Y (par exemple par un pilote d'axe Z).

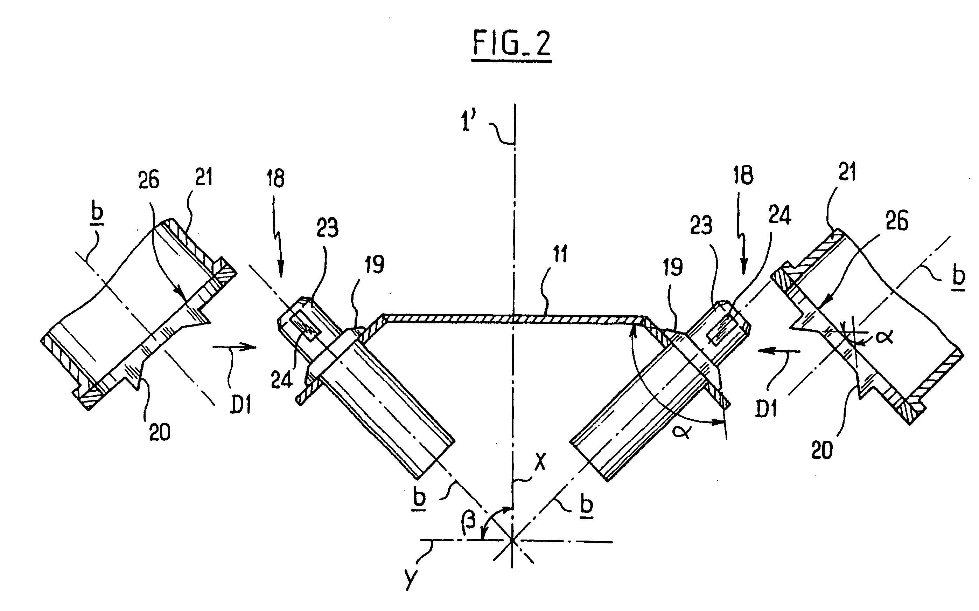

Les moyens de maintien en position 18 sont agencés pour permettre un accostage du cadre 11 par chacun des cadres 14 selon une direction D1 parallèle à la direction Y et un accostage des cadres 14 par le cadre 11 selon une direction D2 parallèle à la direction X (voir les figures 2. et 3). Ces deux directions d'accostage sont coplanaires et forment entre elles un angle d'accostage β ici égal à 90°. Les moyens de maintien en position permettent également un accostage des outils selon des directions intermédiaires entre les directions extrêmes D1 et D2.

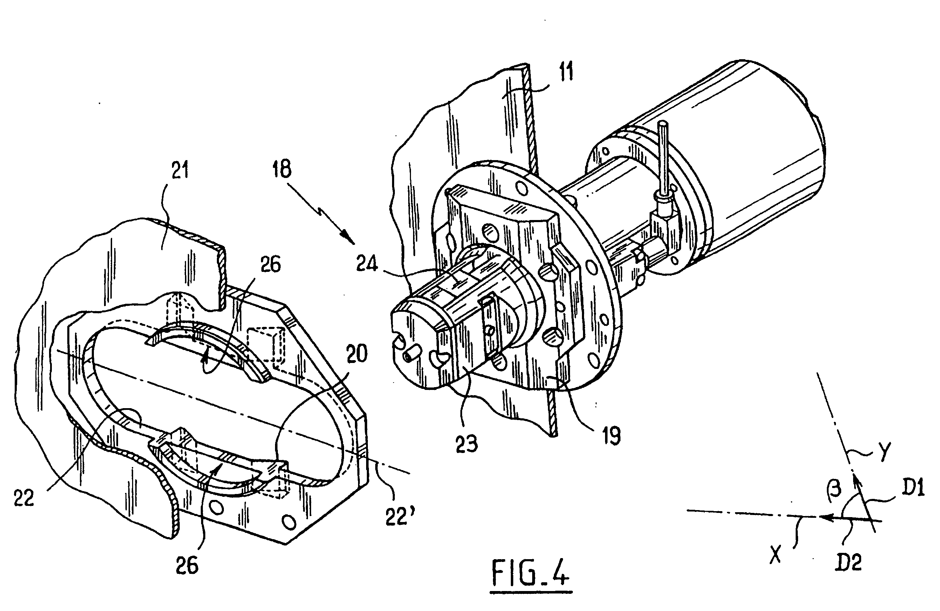

En référence également à la figure 4, chaque moyen de maintien en position 18 comprend un vé mâle 19 et un vé femelle 20 ayant un angle d'ouverture α de 120° environ. L'angle d'ouverture α des vés est au moins égal à l'angle d'accostage et de préférence supérieur à celui-ci.

L'outil transversal est associé à deux vés mâles 19 disposés symétriquement par rapport à l'axe 1' pour coopérer chacun avec un outil latéral. Chaque vé mâle 19 est solidaire du cadre 11 de telle manière qu'il soit centré sur une direction parallèle à la bissectrice de l'angle d'accostage, c'est-à-dire qu'en l'espèce la bissectrice b de l'angle d'ouverture α forme un angle de 45° avec les directions X et Y et s'étend dans un plan parallèle au plan contenant lesdites directions X et Y.

Les vés femelles 20 sont solidaires d'une extrémité d'un bras 21 lui-même solidaire du montant arrière 17 du cadre 14 concerné pour former un angle de 45° par rapport aux directions X et Y. Les vés femelles 20 sont montés comme les vés mâles 19 de manière à être centrés sur une direction parallèle à la bissectrice de l'angle d'accostage, c'est-à-dire qu'en l'occurrence la bissectrice b de l'angle d'ouverture α du vé femelle forme un angle de 45° environ avec les directions X et Y et est coplanaire à celles-ci. Une lumière allongée 22 ayant un grand axe 22' contenu dans le plan des directions d'accostage est ménagée transversalement dans chaque vé femelle 20.

Chaque moyen de maintien en position 18 comprend en outre un moyen pour appliquer le vé mâle 19 contre le vé femelle 20 selon la bissectrice de l'angle d'accostage β et la bissectrice b des angles d'ouverture α.

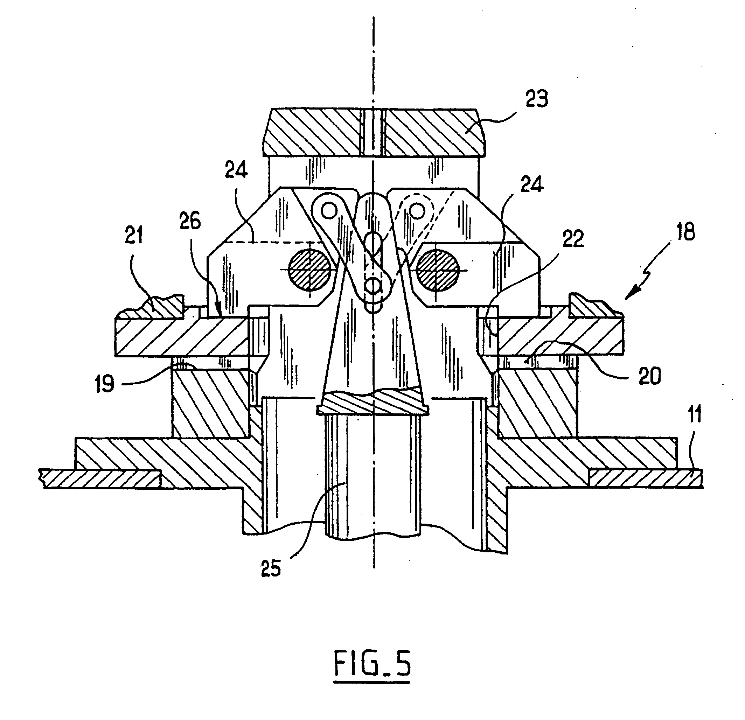

Ce moyen comprend un pion 23 s'étendant en saillie du vé mâle 19 le long de la bissectrice b symétriquement par rapport à celui-ci et parallèlement à la bissectrice de l'angle d'accostage. Deux mâchoires 24 sont montées mobiles sur le pion 23 pour être actionnées de façon connue en elle-même par une tige de commande 25 (formée par la tige d'un vérin non représenté) entre une position active dans laquelle elles s'étendent en saillie latéralement par rapport au pion 23 (figure 5) et une position inactive dans laquelle elles sont escamotées dans le pion 23 (figure 4).

En fonctionnement, la coopération entre les cadres 11 et 14 et l'élément de carrosserie 3, 2 correspondant peut se faire au moment où on met en place les cadres 11 et 14 dans le bâti du poste 10, la jupe 3, le soubassement 1 et les côtés de caisse 2 préalablement mis en place dans le bâti du dispositif étant alors pré-assemblés. Les pinces des cadres 11 et 14 peuvent aussi constituer des moyens d'attelage du cadre 11, 14 et de l'élément de carrosserie 3, 2 correspondants mis en oeuvre à l'extérieur de la ligne d'assemblage, le cadre 11, 14 constituant alors une sorte de palette de transport de l'élément de carrosserie 3, 2 correspondant que le robot 13, 16 vient mettre en place dans le dispositif.

Dans un premier mode d'accostage mutuel des outils représenté à la figure 2 et correspondant à un type de carrosserie dans lequel les côtés de caisse 2 viennent encadrer la jupe 3, le cadre 11 est mis en place sur le bâti 10 avant les cadres 14, lesquels sont ensuite approchés du cadre 11 selon la direction D1 parallèle à la direction Y.

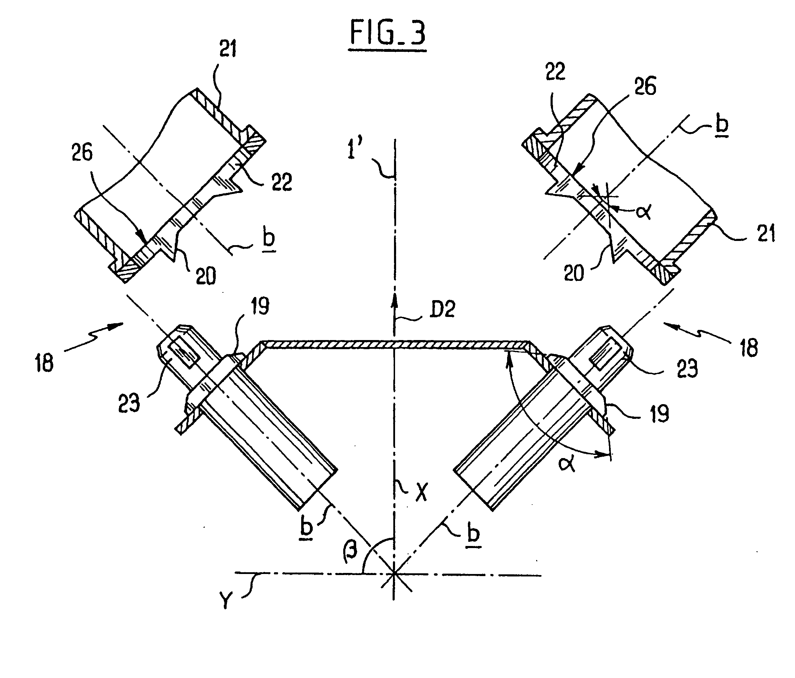

Dans un deuxième mode d'accostage représenté à la figure 3 et correspondant' à un type de carrosserie dans lequel la jupe 3 vient coiffer les extrémités arrière des côtés de caisse 2, les cadres 14 sont mis en place dans le bâti 10 avant le cadre 11, lequel est ensuite approché des cadres 14 selon la direction D2 parallèle à la direction X.

Dans un troisième mode d'accostage, les cadres 11 et 14 sont approchés les uns des autres simultanément.

Lors de la phase d'accostage, le pion 23 de chaque moyen 18 est introduit dans la lumière 22 du vé femelle 20 correspondant et se déplace le long de celle-ci jusqu'à ce que le vé mâle 19 soit reçu dans le vé femelle 20. La mise en position active des mâchoires 24 est commandée de sorte que celles-ci prenant appui sur la face arrière 26 du vé femelle 20 opposée au vé mâle 19 provoquent un effort de traction sur le vé mâle 19 qui est appliqué contre le vé femelle 20 selon une direction parallèle à la bissectrice b de l'angle d'ouverture α des vés (voir la figure 5) et forment alors une butée pour la face arrière 26. On notera que l'angle d'ouverture α des vés et les matériaux utilisés pour réaliser ceux-ci (ici de l'acier) sont déterminés pour permettre un glissement des faces de chaque vé en contact lors des phases d'accostage et d'application des vés l'un contre l'autre. La normale à ces faces et la direction de l'effort d'application des vés l'un contre.l'autre forment ainsi un angle supérieur à l'angle de frottement des matériaux utilisés pour réaliser les vés.

Les parties arrière des côtés de caisse 2 et la jupe 3 sont de la sorte parfaitement mises en position par rapport au soubassement 1 et ce, de manière très rigide grâce à des moyens simples et légers.

La partie des cadres 14 opposée aux montants 17, n'est pas immobilisée en Y. On peut donc les rapprocher l'un de l'autre en exerçant un effort selon la direction Y sur cette partie avant. Des extensions non représentées ici, parallèles à la direction Y, solidaires des cadres 14, constituent des moyens d'appui mutuels de ceux-ci limitant leur rapprochement et permettant leur liaison.

On procède alors à la liaison ou au complément de liaison du soubassement 1, des côtés de caisse 2 et de la jupe 3 par soudage par points au moyen de robots non représentés. La mise en place de panneaux de toit et de traverses non représentés entre les côtés de caisse peut être réalisée dans le même poste ou dans un poste suivant. Pour ce faire, il suffit de placer la structure de pavillon, c'est-à-dire le panneau de toit et des traverses entre les brancards (partie supérieure) des côtés de caisse 2 au moyen d'un châssis du genre cadre, de rapprocher les côtés de caisse l'un vers l'autre donc contre la structure de toit et de souder.

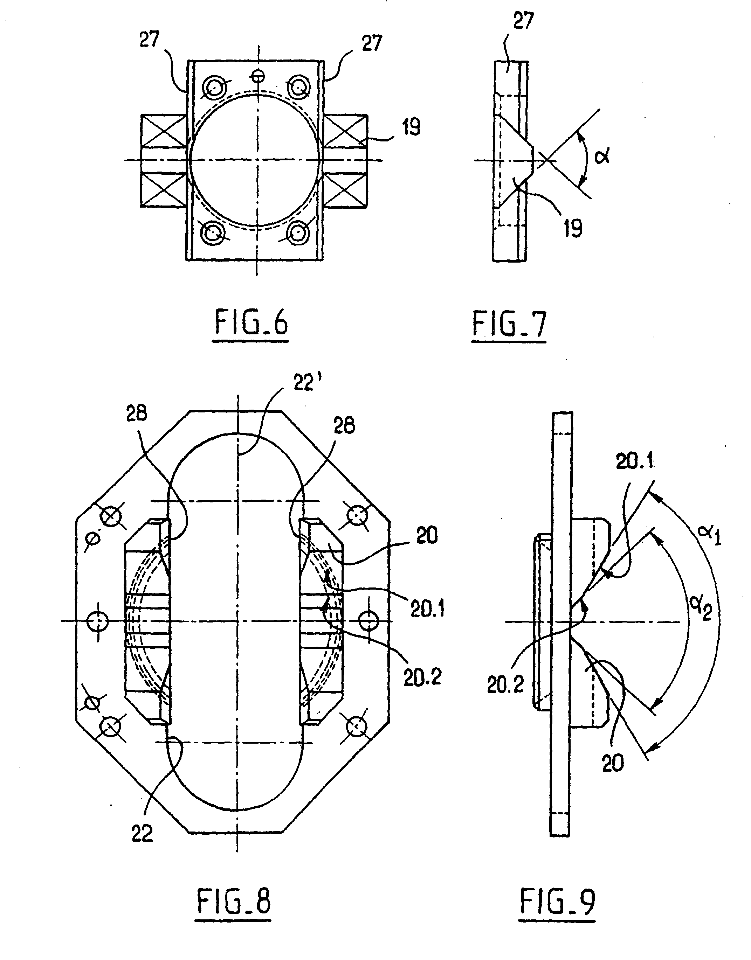

En variante, conformément aux figures 6 à 9, chaque vé femelle 20 comprend une portion d'entrée 20.1 ayant un angle d'ouverture α1 égal à 120° et une portion de fond 20.2 ayant un angle d'ouverture α2 égal à l'angle d'accostage β, soit 90°.

Chaque vé mâle 19 a un angle d'ouverture α égal à l'angle d'accostage β et à l'angle d'ouverture α2, soit 90° en l'espèce.

La portion d'entrée 20.1 du vé femelle 20 exerce ainsi une fonction de guidage dynamique du vé mâle 19 lors de la phase d'accostage tandis que la portion de fond 20.2 du vé femelle 20 assure essentiellement une fonction de positionnement du vé mâle 19 lors de la mise en position active des mâchoires 24.

On remarque que le vé mâle 19 comprend deux faces parallèles transversales 27 opposées et que le vé femelle comporte deux faces parallèles transversales 28 s'étendant en regard de part et d'autre de la lumière 22. Lorsque les vés sont montés sur les outils correspondants, les faces 27 et 28 sont perpendiculaires à la direction Z de telle manière que, quand le vé mâle 19 est appliqué contre le vé femelle 20, les faces 28 encadrent les faces 27 pour immobiliser le vé mâle et le vé femelle l'un par rapport à l'autre dans la direction Z. Un positionnement relatif des outils selon la direction Z est ainsi réalisé.

Bien entendu, l'invention n'est pas limitée au mode de réalisation décrit et on peut y apporter des variantes de réalisation sans sortir du cadre de l'invention tel que défini par les revendications.

En particulier, les moyens de maintien en position peuvent comprendre des vés mâle et femelle additionnels pour assurer un positionnement relatif des outils selon la direction Z, ou les vés mâle et femelle peuvent comprendre des portions coniques.

En outre, d'autres angles d'ouverture des vés peuvent être utilisés, déterminés notamment en fonction de la valeur de l'angle d'accostage.

On peut également prévoir que l'outil transversal du dispositif d'assemblage ne coopère pas avec un élément de carrosserie et n'assure que la fonction d'entretoisement et de contreventement des outils latéraux.

Enfin, le moyen de maintien en position conforme à l'invention n'est pas limité à l'application décrite relative au dispositif d'assemblage mais peut être employé pour le maintien en position de tout type de pièces manipulées en particulier par des robots pour être approchées selon deux directions extrêmes d'accostage.

## Revendications

1. Moyen de maintien en position de deux pièces destinées à être approchées l'une de l'autre selon au moins deux directions extrêmes d'accostage (D1, D2) coplanaires formant entre elles un angle d'accostage (β), **caractérisé en ce que** le moyen de maintien en position comprend d'une part au moins un vé mâle (19) et un vé femelle (20) pourvus chacun de moyens de sa fixation à une des pièces de telle manière que chaque vé soit centré sensiblement sur une direction parallèle à la bissectrice de l'angle d'accostage et le vé femelle possédant une portion d'entrée (20.1) ayant un angle d'ouverture (α1, α) au moins égal à l'angle d'accostage, et d'autre part, un moyen (23, 24) pour appliquer le vé mâle contre le vé femelle selon ladite bissectrice.

2. Moyen de maintien en position selon la revendication 1, **caractérisé en ce que** les vés (19, 20) ont des angles d'ouverture (α) sensiblement égaux qui sont supérieurs à l'angle d'accostage (β).

3. Moyen de maintien en position selon la revendication 2, **caractérisé en ce que**, pour un angle d'accostage (β) d'environ 90°, les angles d'ouverture (α) des vés (19, 20) sont égaux à environ 120°.

4. Moyen de maintien en position selon la revendication 1, **caractérisé en ce que** le vé femelle (20) possède une portion de fond (20.2) ayant un angle d'ouverture (α2) sensiblement égal à l'angle d'ouverture du vé mâle (19) qui est au moins égal à l'angle d'accostage (β), et **en ce que** l'angle d'ouverture (α1) de la portion d'entrée (20.1) du vé femelle est supérieur à l'angle d'ouverture (α2) de la portion de fond (20.2) de celui-ci.

5. Moyen de maintien en position selon la revendication 4, **caractérisé en ce que**, pour un angle d'accostage (β) sensiblement égal à 90°, l'angle d'ouverture (α2) du vé mâle et de la portion de fond (20.2) du vé femelle (20) est sensiblement égal à 90° et l'angle d'ouverture (α1) de la portion d'entrée (20.1) du ve femelle (20) est sensiblement égal à 120°.

6. Moyen de maintien en position selon l'une quelconque des revendications 1 à 5, **caractérisé en ce que** le moyen pour appliquer comprend un pion (23) s'étendant en saillie du vé mâle (19) symétriquement par rapport à celui-ci pour être introduit dans une lumière allongée (22) ménagée dans le vé femelle (20) et de grand axe contenu dans le plan des directions d'accostage, au moins une mâchoire (24) étant montée mobile sur le pion (23) pour être actionnée entre une position active dans laquelle elle forme une butée pour une face arrière (26) du vé femelle opposée au vé mâle et une position inactive dans laquelle elle est escamotée et permet le passage libre du pion dans la lumière du vé femelle.

7. Dispositif d'assemblage d'une carrosserie, comportant deux outils latéraux (14) de support de côtés de caisse (2) et un outil transversal (11) à ces deux outils latéraux, **caractérisé en ce que** le dispositif comprend des moyens (18) conformes à l'une quelconque des revendications précédentes pour maintenir en position les uns par rapport aux autres les outils latéraux et l'outil transversal, l'outil transversal comportant au moins deux vés (19) disposés symétriquement par rapport à un axe longitudinal de la carrosserie et destinés à coopérer avec des vés (20) correspondants fixés sur les outils latéraux.

8. Dispositif selon la revendication 7 prise en dépendance de la revendication 3 ou 5, **caractérisé en ce que** la bissectrice (b) des angles d'ouverture (α) des vés (19, 20) forme avec l'axe longitudinal de la carrosserie un angle d'environ 45°.

9. Dispositif selon la revendication 7 ou la revendication 8, **caractérisé en ce que** les vés solidaires de l'outil transversal (11) sont des vés mâles (19) et les vés solidaires des outils latéraux (14) sont des vés femelles (20) .

## Patentansprüche

1. Haltevorrichtung zum Halten zweier Teile in Position, wobei die Teile zur Annäherung entlang mindestens zweier koplanarer Extremrichtungen (D1, D2) bestimmt sind, die zwischen sich einen Anlagewinkel (β) einschließen, **dadurch gekennzeichnet, daß** die Haltevorrichtung einerseits mindestens einen V-Zapfen (19) und eine V-Aufnahme (20) hat, die jeweils mit Mitteln zu Ihrer Befestigung an einem der Teile versehen sind derart, daß jedes V-Element im wesentlichen auf eine zu einer Winkelhalbierenden des Anlagewinkels parallele Richtung zentriert ist, und wobei die V-Aufnahme einen Eintrittsabschnitt (20.1) mit einem Öffnungswinkel (α1, α) hat, der mindestens gleich dem Anlagewinkel ist, und wobei die Haltevorrichtung andererseits Mittel (23, 24) zum Andrücken des V-Zapfens gegen die V-Aufnahme entlang der Winkelhalbierenden hat.

2. Haltevorrichtung nach Anspruch 1, **dadurch gekennzeichnet, daß** die V-Elemente im wesentlichen gleiche Öffnungswinkel (α) haben, die größer als der Anlagewinkel (β) sind.

3. Haltevorrichtung nach Anspruch 2, **dadurch gekennzeichnet, daß** für einen Anlagewinkel (β) von 90° die Öffnungswinkel (α) der V-Elemente (19, 20) ungefähr gleich 120° sind.

4. Haltevorrichtung nach Anspruch 1, **dadurch gekennzeichnet, daß** die V-Aufnahme (20) einen Bodenabschnitt (20.2) hat mit einem Öffnungswinkel (α2), der im wesentlichen gleich dem Öffnungswinkel des V-Zapfens (19) ist, der mindestens gleich dem Anlagewinkel (β) ist, und daß der Öffnungswinkel (α1) des Eintrittsabschnittes (20.1) der V-Aufnahme größer als der Öffnungswinkel (α2) des Bodenabschnittes (20.2) der V-Aufnahme ist.

5. Haltevorrichtung nach Anspruch 4, **dadurch gekennzeichnet, daß** für einen Anlagewinkel (β) von im wesentlichen 90° der Öffnungswinkel (α2) des V-Zapfens und des Bodenabschnittes (20.2) der V-Aufnahme (20) im wesentlichen gleich 90° ist und daß der Öffnungswinkel (α1) des Eintrittsabschnittes (20.1) der V-Aufnahme (20) im wesentlichen gleich 120° ist.

6. Haltevorrichtung nach einem der Ansprüche 1 bis 5, **dadurch gekennzeichnet, daß** die Andruckmittel einen Stein (23) umfassen, der über den V-Zapfen (19) symmetrisch zu diesem herausragt, so daß er in eine längliche Durchbrechung (22) einführbar ist, die in der V-Aufnahme (20) ausgebildet ist und deren große Achse in der Ebene der Anlagerichtungen liegt, wobei an dem Stein (23) mindestens eine Backe (24) beweglich so angeordnet ist, daß sie zwischen einer aktiven Stellung, in der sie einen Anschlag für eine dem V-Zapfen abgewandte Rückseite (26) der V-Aufnahme bildet, und einer inaktiven Stellung verstellbar ist, in der sie ausgerückt ist und den freien Durchtritt des Steines durch die Durchbrechung der V-Aufnahme ermöglicht.

7. Vorrichtung zum Zusammensetzen einer Karosserie, umfassend zwei seitliche Werkzeuge (14) zum Tragen der Zellenseitenwände (2) und ein quer zu den beiden seitlichen Werkzeugen gerichtetes Werkzeug (11), **dadurch gekennzeichnet, daß** die Vorrichtung Mittel (18) nach einem der vorangegangenen Ansprüche hat, um die beiden seitlichen Werkzeuge und das quer gerichtete Werkzeug in Position relativ zueinander zu halten, wobei das quer gerichtete Werkzeug mindestens zwei V-Elemente (19) trägt, die symmetrisch bezüglich der Längsachse der Karosserie angeordnet sind und zum Zusammenwirken mit entsprechenden V-Elementen (20) bestimmt sind, die an den seitlichen Werkzeugen befestigt sind.

8. Vorrichtung nach Anspruch 7 in Verbindung mit den Ansprüchen 3 oder 5, **dadurch gekennzeichnet, daß** die Winkelhalbierende (b) der Öffnungswinkel (α) der V-Elemente (19, 20) mit der Längsachse der Karosserie einen Winkel von ungefähr 45° bildet.

9. Vorrichtung nach Anspruch 7 oder 8, **dadurch gekennzeichnet, daß** die mit dem quer gerichteten Werkzeug (11) verbundenen V-Elemente die V-Zapfen (19) sind und daß die mit den seitlichen Werkzeugen (14) verbundenen V-Elemente die V-Aufnahmen (20) sind.

## Claims

1. Means for holding two pieces in position that are to be moved towards each other along at least two extreme coplanar docking directions (D1, D2) that form a docking angle (β) between them, the position-holding means being **characterized in that** it comprises firstly at least a male and a female V (19, 20) each provided with means for fixing to a respective one of the pieces so that each V is centered substantially on a direction parallel to the bisector of the docking angle, the female V possessing an inlet portion (20.1) having an aperture angle (α1, α) not less than the docking angle, and secondly means (23, 24) for pressing the male V against the female V along said bisector.

2. Position-holding means according to claim 1, **characterized in that** the Vs (19, 20) have aperture angles (α) that are substantially equal and greater than the docking angle (β).

3. Position-holding means according to claim 2, **characterized in that** for a docking angle (β) of about 90°, the aperture angles (α) of the Vs (19, 20) are equal to about 120°.

4. Position-holding means according to claim 1, **characterized in that** the female V (20) possesses an end portion (20.2) having an aperture angle (α2) substantially equal to the aperture angle of the male V (19) which is not less than the docking angle (β), and **in that** the aperture angle (α1) of the inlet portion (20.1) of the female V is greater than the aperture angle (α2) of the end portion (20.2) thereof.

5. Position-holding means according to claim 4, **characterized in that**, for a docking angle (β) substantially equal to 90°, the aperture angle (α2) of the male V and of the end portion (20.2) of the female V (20) is substantially equal to 90°, and the aperture angle (α1) of the inlet portion (20.1) of the female V (20) is substantially equal to 120°.

6. Position-holding means according to any one of claims 1 to 5, **characterized in that** the means for pressing the Vs together comprise a peg (23) projecting from the male V (19) symmetrically relative thereto so as to be inserted into an elongate slot (22) formed in the female V (20) and having a major axis contained in the plane of the docking direction, at least one jaw (24) being movably mounted on the peg (23) to be actuated between an active position in which it forms an abutment for a rear face (26) of the female V facing away from the male V, and an inactive position in which it is retracted and allows the peg to pass freely through the slot of the female V.

7. Apparatus for assembling bodywork, the apparatus comprising two side tools (14) supporting body sides (2) and a tool (11) extending transversely relative to the two side tools, the apparatus being **characterized in that** it comprises means (18) according to any preceding claim for holding the side tools and the transverse tool in position relative to one another, the transverse tool having at least two Vs (19) disposed symmetrically about a longitudinal axis of the bodywork and designed to cooperate with corresponding Vs (20) fixed to the side tools.

8. Apparatus according to claim 7, as dependent on claim 3 or claim 5, **characterized in that** the bisector (b) of the aperture angles (α) of the Vs (19, 20) forms an angle of about 45° with the longitudinal axis of the bodywork.

9. Apparatus according to claim 7 or claim 8, **characterized in that** the Vs secured to the transverse tool (11) are male Vs (19) and the Vs secured to the side tools (14) are female Vs (20).
